# EUROPÄISCHE PATENTSCHRIFT

(11) **EP 2 554 038 B1**
(45) Veröffentlichungstag und Bekanntmachung des Hinweises auf die Patenterteilung: **25.07.2018**
(21) Anmeldenummer: 12005589.2
(22) Anmeldetag: 01.08.2012
(51) Int. Cl.: A01G 3/053

(54) **Messeranordnung einer Heckenschere**
Cutting assembly of a hedge shear
Agencement de mesure d'une taille-haie

(30) Priorität: 05.08.2011 DE 102011109512
(43) Veröffentlichungstag der Anmeldung: 06.02.2013
(73) Patentinhaber: Andreas Stihl AG & Co. KG, 71336 Waiblingen (DE)
(72) Erfinder: Kaupp, Klaus, 70329 Stuttgart (DE)
(74) Vertreter: Zurhorst, Stefan

(56) Entgegenhaltungen:
- DE-A1- 3 137 118
- DE-A1- 19 600 311
- GB-A- 2 383 249
- US-A- 4 280 276

## Beschreibung

Die Erfindung betrifft eine Messeranordnung einer Heckenschere mit den Merkmalen nach dem Oberbegriff des Anspruchs 1 sowie eine Heckenschere mit einer derartigen Messeranordnung.

Motorisch angetriebene Heckenscheren weisen in vorbekannter Bauform einen Messerbalken mit zwei Schermessern auf. Entweder ist eines der beiden Schermesser feststehend, während das andere Schermesser relativ dazu zwischen zwei Umkehrpunkten oszillierend bewegbar ist, oder aber beide Schermesser sind zwischen zwei Umkehrpunkten gegenläufig oszillierend bewegbar. Beide Schermesser weisen gegeneinander wirkende, in regelmäßigen Abständen zueinander angeordnete Schneidzähne auf. Für dünne und vergleichsweise weiche Zweige, Äste oder anderes vergleichbares Schnittgut sind die Schneidzähne an ihren Flanken mit Scherschneiden zum spanlosen, scherenden Durchtrennen von Schnittgut versehen.

Für einen derartigen scherenden, spanlosen Schnitt wird das Schnittgut in den Schnittraum zwischen zwei benachbarten Schneidzähnen eingeführt. Damit dies möglich ist, liegen die Schneidzähne des einen Schermessers in ihren Umkehrpunkten in Überdeckung mit den Schneidzähnen des anderen Schermessers, wodurch der zwischenliegende Schnittraum frei zur Aufnahme des Schnittgutes ist. Ausgehend von den Umkehrpunkten führen die beiden Schermesser gemeinsam mit ihren Schneidzähnen eine Relativbewegung aus, deren Geschwindigkeitsverlauf bis zum nächsten Umkehrpunkt die Form einer halben Sinuskurve aufweist. Der spanlose Trennschnitt erfolgt zu einem Zeitpunkt, wenn sich zwei gegenläufige Schneidzähne aneinander annähern und dabei nahe ihrem Bewegungsumkehrpunkt sind. Aufgrund des vorgenannten sinusförmigen Geschwindigkeitsverlaufes ist hierbei die Schnittgeschwindigkeit im Vergleich zur maximalen Bewegungsgeschwindigkeit gering. Dies ist insbesondere nachteilig bei dünnem und zähem Schnittgut, welches es bei einem feinen sogenannten Trimmschnitt zu durchtrennen gilt. In solchen Fällen ist statt eines sauberen Scherschnittes ein Abreißen des Schnittgutes bzw. ein Ausfransen der Schnittstellen zu beobachten.

Eine Erhöhung der Antriebsgeschwindigkeit zur Vergrößerung der Schnittgeschwindigkeit ist nur eingeschränkt möglich, da hierzu ein hoher technischer Aufwand erforderlich ist. Für die Lagerung des Messerantriebes in Form eines Pleuel- oder Kulissenantriebes müssen ab einer gewissen Antriebsgeschwindigkeit Wälzlager eingesetzt werden, um die erforderliche Dauerhaltbarkeit sicherzustellen. Der damit verbundene Aufwand ist jedoch für viele Anwendungsfälle wirtschaftlich nicht gerechtfertigt.

Aus der DE 31 37 118 A1 ist ein Doppelmesser mit Langhub als Schneidwerk für Gras und Getreide bekannt, wobei der Hub von Ober- und Untermesser auf eine ganze Messerteilung oder sogar darüber hinaus vergrößert ist. Dies führt dazu, dass die Abstände zwischen den Schneidzähnen und der Hub derart aufeinander abgestimmt sind, dass der erste Schneidzahn des einen Schermessers zwischen seinen beiden Umkehrpunkten einen zwischen dem ersten und dem zweiten Schneidzahn des anderen Schermessers liegenden dritten Schneidzahn des anderen Schermessers vollständig überstreicht. Hierdurch ist insbesondere ein feiner Trimmschnitt möglich, während Rückschnittarbeiten an dickeren Ästen nicht oder nur eingeschränkt durchgeführt werden können.

Darüber hinaus sind Ausführungen von Messerbalken bekannt, bei denen zumindest abschnittsweise Sägezähne für einen zerspanenden Trennschnitt vorgesehen sind. Derartige Sägezähne sind für das Durchtrennen von dickerem und härterem Astwerk vorgesehen, wobei das Problem des Abreißens bzw. Ausfransens nicht auftritt. Das dicke Astwerk wird nicht zwischen die Sägezähne geführt. Vielmehr werden die Sägezähne seitlich an das Astwerk herangeführt, wobei die Spitzen der Sägezähne einen spanabhebenden Schnitt durchführen. Ein solcher spanabhebender Schnitt erfolgt gleichermaßen mit geringer Schnittgeschwindigkeit an den Umkehrpunkten wie auch mit höherer Schnittgeschwindigkeit entsprechend dem sinusförmigen Geschwindigkeitsverlauf im Mittenbereich dazwischen.

Damit ein derartiger Sägeschnitt ausgeführt werden kann, muss das zu durchtrennende Astwerk hinreichend dick und unnachgiebig sein. Dies erlaubt das Aufbringen eines seitlichen Drucks vom Messerbalken auf das Astwerk, um den Zerspanungsvorgang in Gang zu setzen. Das bei einem feinen Trimmschnitt zu durchtrennende dünne und nachgiebige Schnittgut ist mit einer derartigen Sägeanordnung nicht bearbeitbar, da in einem solchen Fall ein spanabhebender Trennschnitt ausbliebe und allenfalls eine ausfransende Schädigung des Schnittgutes einträte. Die Schnittverhältnisse bei einer spanenden Sägezahnausführung sind deshalb nicht auf die Schnittverhältnisse bei einer der Erfindung zugrunde liegenden Ausführung zum spanlosen, scherenden Durchtrennen von Schnittgut, insbesondere für einen feinen Trimmschnitt übertragbar.

Die US 4,280,276 A offenbart noch einen unsymmetrisch aufgebauten Messerbalken, welcher auf seiner einen Seite einen Trimmschnittbereich mit Scherschneidmessern und auf seiner gegenüberliegenden Seite einen Grobschnittbereich mit Sägezähnen aufweist. Der Zahnabstand zwischen den einzelnen Sägezähnen ist geringer als der Zahnabstand zwischen den Scherschneidzähnen.

Der Erfindung liegt die Aufgabe zugrunde, einen gattungsgemäßen Messerbalken derart weiterzubilden, dass ein verbessertes Schnittergebnis sowohl bei dünnem, nachgiebigem und zähem Schnittgut als auch bei gröberem Schnittgut erzielt ist.

Diese Aufgabe wird durch einen Messerbalken mit den Merkmalen des Anspruchs 1 gelöst.

Der Erfindung liegt des Weiteren die Aufgabe zugrunde, eine Heckenschere anzugeben, deren Einsatzbereich erweitert ist.

Diese Aufgabe wird durch eine Heckenschere mit den Merkmalen des Anspruchs 15 gelöst.

Es wird ein Messerbalken vorgeschlagen, der mindestens einen Trimmschnittbereich aufweist, in dem die Abstände zwischen den Schneidzähnen und der Hub derart aufeinander abgestimmt sind, dass der erste Schneidzahn des einen Schermessers zwischen seinen beiden Umkehrpunkten einen zwischen dem ersten und dem zweiten Schneidzahn des anderen Schermessers liegenden dritten Schneidzahn vollständig überstreicht. Dabei kann es zweckmäßig sein, dass neben dem genannten dritten Schneidzahn auch ein oder mehrere weitere zwischenliegende Schneidzähne vollständig überstrichen werden. Bevorzugt liegt der genannte dritte Schneidzahn des Trimmschnittbereiches unmittelbar benachbart zwischen den ersten und zweiten Schneidzähnen des Trimmschnittbereiches, so dass nur dieser einzelne dritte Schneidzahn vollständig überstrichen wird. Insbesondere ist der Abstand zwischen den Schneidzähnen des Trimmschnittbereiches zumindest eines der beiden Schermesser und insbesondere beider Schermesser im Verlauf des Trimmschnittbereiches gleichmäßig. Mit anderen Worten weisen also die Schneidzähne entlang des Trimmschnittbereiches jeweils Abstände zueinander mit gleichem Betrag auf. Hierdurch ist sichergestellt, dass für alle Schneidzähne die gleichen geometrischen Bedingungen beim Schnitt herrschen.

Die Erfindung geht dabei von der Überlegung aus, dass die einzelnen Schermesser den eingangs erwähnten Geschwindigkeitsverlauf in Form einer halben Sinuskurve haben, demnach die Bewegungsgeschwindigkeit im Mittelpunkt zwischen den beiden Umkehrpunkten maximal ist. Dies führt dazu, dass der erste Schneidzahn des einen Schermessers den vorgenannten zwischenliegenden dritten Schneidzahn des anderen Schermessers im Bereich seiner maximalen Geschwindigkeit überstreicht, woraus eine maximierte Schnittgeschwindigkeit folgt. Es wird davon ausgegangen, dass diese erhöhte Bewegungs- und Schnittgeschwindigkeit zu einem saubereren Scherschnittergebnis insbesondere bei dünnem, nachgiebigem und zähem Schnittgut führt. Zusätzlich findet auch ein Scherschnitt im Bereich der beiden Umkehrpunkte statt, so dass mit jedem Hub im Vergleich zum Stand der Technik die doppelte Anzahl von spanlosen Scherschnitten durchgeführt wird. Insgesamt ist eine erhöhte Schnittleistung mit einem saubereren Schnittergebnis kombiniert, ohne dass die Antriebsgeschwindigkeit erhöht werden muss. Vielmehr kann die Antriebsgeschwindigkeit derart niedrig gehalten werden, dass auf kostenintensive geschwindigkeitserhöhende Maßnahmen wie Wälzlagerungen oder dergleichen verzichtet werden kann.

In bevorzugter Weiterbildung der Erfindung ist der Abstand zwischen den Schneidzähnen im Trimmschnittbereich gleich der Hälfte der Summe des Hubes des einen Schermessers und des Hubes des anderen Schermessers. Dabei können beide Schermesser den im Betrag gleichen, jedoch um 180° versetzten Hub aufweisen. Ebenso ist es möglich, dass ein Schermesser stillsteht, während das andere Schermesser um einen entsprechend angepassten Hub relativ dazu bewegt wird. In allen vorgenannten Fällen ist sichergestellt, dass in den Umkehrpunkten die Schneidzähne des einen Schermessers mit den korrespondierenden Schneidzähnen des anderen Schermessers in Überdeckung liegen, wobei die zwischenliegenden Schnitträume für das Einführen von Schnittgut geöffnet sind. Außerdem werden die mittleren, dritten Schneidzähne mit maximaler Relativgeschwindigkeit überstrichen.

In einer vorteilhaften Variante der Erfindung weisen die Schneidzähne des einen Schermessers zumindest in einem Teilabschnitt des Trimmschnittbereiches einen Abstand zueinander auf, der vom Abstand zwischen den zugeordneten Schneidzähnen des anderen Schermessers abweicht. Dabei kann es zweckmäßig sein, dass innerhalb eines oder beider Schermesser jeweils der Zahnabstand konstant ist, wobei aber die Zahnabstände des einen Schermessers von den Zahnabständen des anderen Schermessers abweichen. Vorteilhaft ist der Abstand zwischen den Schneidzähnen zumindest eines der beiden Schermesser und insbesondere beider Schermesser im Verlauf des Trimmschnittbereiches ungleichmäßig. Hierdurch wird erreicht, dass nicht alle Schneidzähne des Trimmschnittbereiches gleichzeitig eine Scherung des Schnittgutes durchführen. Vielmehr erfolgt die Scherung an verschiedenen Schneidzähnen zu unterschiedlichen Zeitpunkten, was den Antrieb sowie die Lagerung der bewegten Teile entlastet.

Bevorzugt ist der Abstand zwischen den Schneidzähnen im Trimmschnittbereich größer/gleich der Hälfte der Summe des Hubes des einen Schermessers und des Hubes des anderen Schermessers. Insbesondere wird der Abstand zwischen den Schneidzähnen des einen Schermessers von einem Ende des Messerbalkens aus zu dessen gegenüberliegenden Ende hin größer, während der Abstand zwischen den Schneidzähnen des zugeordneten anderen Schermessers vom gleichen Ende des Messerbalkens aus zu dessen gegenüberliegenden Ende hin kleiner wird. Unter Beibehaltung der zuvor genannten Vorteile ist sichergestellt, dass im gesamten Trimmschnittbereich immer ein Abschnitt eine Scherung durchführt, während in benachbarten Abschnitten die Schneidzähne auf Lücke stehen und dadurch ein Einführen des Schnittgutes in die Zwischenräume zwischen den Schneidzähnen ermöglichen.

Der Messerbalken weist eine für den Schnitt nutzbare Länge auf, indem die Schermesser mit Schneidzähnen versehen sind. Es kann zweckmäßig sein, einen verkürzten Trimmschnittbereich vorzusehen, der sich nur über einen Teil der genannten nutzbaren Länge erstreckt. Bevorzugt erstreckt sich der Trimmschnittbereich auf einer Seite des Messerbalkens über dessen gesamte nutzbare Länge. Beim Trimmen von Sträuchern, Büschen oder dergleichen kann der Betreiber die volle verfügbare Länge des Messerbalkens mit einem durchgehend gleichmäßigen Schnittergebnis nutzen, wodurch saubere und großflächige Trimmflächen erzielbar sind.

Der Messerbalken weist zwei bezogen auf seine Längsachse sich gegenüberliegende Seiten auf. Gemäß der Erfindung ist vorgesehen, dass auf einer Seite ein Trimmschnittbereich und auf der gegenüberliegenden Seite ein Grobschnittbereich bzw. Rückschnittbereich mit in regelmäßigen Abständen zueinander angeordneten Schneidzähnen vorgesehen ist, wobei der Abstand der Schneidzähne im Grobschnittbereich größer ist als der Abstand der Schneidzähne im Trimmschnittbereich. Auch im Grobschnittbereich sind die Schneidzähne mit Scherschneiden zum spanlosen, scherenden Durchtrennen von Schnittgut versehen. Hierbei liegt ein Schneidzahn des einen Schermessers in den beiden Umkehrpunkten in Überdeckung mit einem Schneidzahn des anderen Schermessers. Insbesondere beträgt der Abstand der Schneidzähne im Grobschnittbereich das Doppelte vom Abstand der Schneidzähne im Trimmschnittbereich. Durch den größeren Zahnabstand im Grobschnittbereich sind bei gleichem Hub keine zwischenliegenden Zähne vorhanden, die vollständig überstrichen werden. Dies erleichtert das Einführen von gröberem Schnittgut in die zwischen den Schneidzähnen liegenden Schnitträume, wodurch ein im Vergleich zum Trimmschnittbereich größerer Arbeitsfortschritt erzielt werden kann.

Es kann zweckmäßig sein, dass nur ein Teil der Schneidzähne mit Scherschneiden versehen ist, während ein anderer dazu korrespondierender Teil der Schneidzähne eine einfache, nicht scharf geschliffene Kante aufweist. Auch das Zusammentreffen einer solchen Kante mit einer scharf geschliffenen Scherschneide führt zu dem gewünschten Scherschnitt. Bevorzugt sind aber sämtliche Schneidzähne des Trimmschnittbereichs und des Grobschnittbereichs mit Scherschneiden zum spanlosen, scherenden Durchtrennen von Schnittgut versehen, wodurch ein sauberes Schnittergebnis bei niedriger Antriebsleistung erzielbar ist.

In einer bevorzugten Ausführungsform sind die Schneidmesser des Messerbalkens auswechselbar. Dies erlaubt es, je nach Anwendungsfall Schneidmesser mit oder ohne Trimmschnittbereich einzusetzen, wodurch das jeweils optimale Arbeitsergebnis erzielt werden kann.

In erfindungsgemäßer Weiterbildung ist eine Heckenschere mit auswechselbaren Messerbalken vorgesehen. Einer dieser Messerbalken weist in erfindungsgemäßer Weise mindestens einen Trimmschnittbereich auf. Außerdem ist ein weiterer Messerbalken mit mindestens einem Grobschnittbereich und ohne Trimmschnittbereich vorgesehen, wobei der Messerbalken mit dem mindestens einen Trimmschnittbereich gegen den weiteren Messerbalken ohne Trimmschnittbereich auswechselbar ist. Hierdurch kann die Heckenschere am Arbeitsort mit wenigen Handgriffen zwischen Trimmschnittbetrieb und Grobschnittbetrieb umgerüstet werden.

Ausführungsbeispiele der Erfindung sind nachfolgend anhand der Zeichnung näher beschrieben. Es zeigen:
- Fig. 1: in einer perspektivischen Ansicht eine motorgetriebene Heckenschere mit einem Messerbalken und mit auswechselbaren Schermessern;
- Fig. 2: in einer perspektivischen Ansicht zwei gegenläufig antreibbare Schermesser nach dem Stand der Technik zum Einsatz in einer Heckenschere nach Fig. 1;
- Fig. 3: in einer Draufsicht die Anordnung nach Fig. 2 mit Schneidzähnen in einem Abstand zueinander, der das Doppelte vom Einzelhub beider Schermesser beträgt;
- Fig. 4: in einer schematischen Darstellung die Schneidzähne nach den Fig. 2 und 3 in ihren Umkehrpunkten mit einer diagrammartigen Darstellung ihres Geschwindigkeitsverlaufes;
- Fig. 5: die Anordnung nach Fig. 4 mit den noch nicht zusammenwirkenden Schneidzähnen im Bereich ihrer maximalen Bewegungsgeschwindigkeit;
- Fig. 6: die Anordnung nach den Fig. 4 und 5 mit den Schneidzähnen während des Schnittvorganges bei gegenüber der Maximalgeschwindigkeit nach Fig. 5 verringerter Relativgeschwindigkeit;
- Fig. 7: die Anordnung nach Fig. 4 mit den Schneidzähnen im gegenüberliegenden Umkehrpunkt;
- Fig. 8: in perspektivischer Ansicht ein erstes erfindungsgemäßes Ausführungsbeispiel der Schermesser zum Einsatz in einen Messerbalken der Heckenschere nach Fig. 1 mit einem Grobschnittbereich auf einer Seite und mit einem Trimmschnittbereich auf der gegenüberliegenden Seite der Anordnung;
- Fig. 9: in einer Draufsicht die Messeranordnung nach Fig. 8 mit Einzelheiten zum Zahnabstand im Trimmschnittbereich in Relation zum Hub beider Schermesser;
- Fig. 10: eine nicht patentgemäße Variante der Anordnung nach Fig. 9 mit beidseitig angeordneten Trimmschnittbereichen;
- Fig. 11: eine vergrößerte Detaildarstellung von Schneidzähnen mit zwischenliegenden Schnitträumen im Trimmschnittbereich nach den Fig. 8 bis 10;
- Fig. 12: in einer schematischen Darstellung einzelne Schneidzähne des Trimmschnittbereichs nach den Fig. 8 bis 11 in ihren Umkehrpunkten und mit einer diagrammartigen Darstellung ihres Geschwindigkeitsverlaufes;
- Fig. 13: die Anordnung nach Fig. 12, demnach einzelne Schneidzähne des einen Schermessers zugeordnete Schneidzähne des anderen Schermessers mit zumindest näherungsweise maximaler Geschwindigkeit vollständig überstreichen;
- Fig. 14: die Anordnung nach den Fig. 12, 13 beim Zusammenwirken von Schneidzähnen beider Schermesser nahe ihrer Umkehrpunkte mit verringerter Relativgeschwindigkeit;
- Fig. 15: die Anordnung nach Fig. 12 im Bereich ihrer gegenüberliegenden Umkehrpunkte;
- Fig. 16: eine alternative Ausführungsform der Anordnung nach den Fig. 12 bis 15, wobei ein Schneidzahn mit scharfen Scherschneiden und der damit zusammenwirkende Schneidzahn mit stumpfen Kanten versehen ist;
- Fig. 17: eine Variante der Anordnung nach Fig. 16, wobei beide zusammenwirkenden Schneidzähne mit je einer scharfen Scherschneide und je einer stumpfen Kante versehen sind;
- Fig. 18: eine weitere Ausführungsform eines nicht patentgemäßen Schermessers mit entlang des Trimmschnittbereichs unterschiedlichen Zahnabständen bei konstanter Zahnbreite;
- Fig. 19: das Schermesser nach Fig. 18 in Wechselwirkung mit den angedeuteten Schneidzähnen eines weiteren, gleichen Schermessers;
- Fig. 20: eine Variante des Schermessers nach Fig. 18 mit entlang des Trimmschnittbereichs unterschiedlichen Zahnbreiten bei konstanten Zahnabständen;
- Fig. 21: das Schermesser nach Fig. 20 in Wechselwirkung mit den angedeuteten Schneidzähnen eines weiteren, gleichen Schermessers;
- Fig. 22: in schematischer Darstellung eine weitere Variante des Schermessers nach den Fig. 18, 20 mit auf einer ersten Seite untereinander gleichen, konstanten Zahnabständen und mit auf der gegenüberliegenden zweiten Seite ebenfalls untereinander gleichen und konstanten, aber von der ersten Seite abweichenden Zahnabständen;
- Fig. 23: das Schermesser nach Fig. 22 in Wechselwirkung mit den Schneidzähnen eines weiteren, gleichen Schermessers.

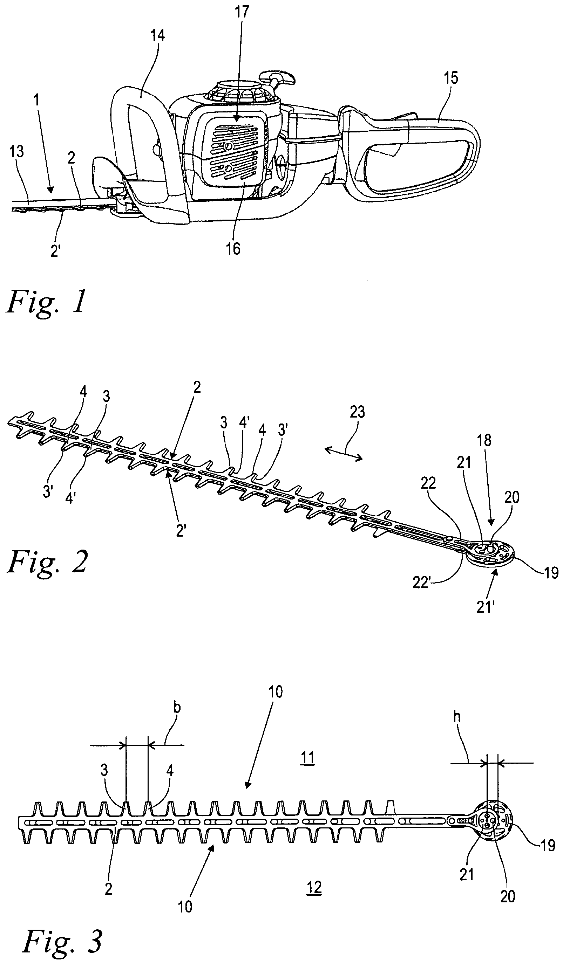

Fig. 1 zeigt in einer perspektivischen Ansicht eine motorisch angetriebene Heckenschere mit einem Messerbalken 1. Die Heckenschere umfasst einen vorderen Handgriff 14 und einen hinteren Handgriff 15, zwischen denen ein Gehäuse 16 zur Aufnahme eines nicht näher dargestellten Motors 17 angeordnet ist. Der Motor 17 ist im gezeigten Ausführungsbeispiel ein Zweitakt-Verbrennungsmotor, kann aber auch ein Viertaktmotor sein. Außerdem kann auch ein elektrischer Antriebsmotor für den Netz- oder Akkubetrieb zweckmäßig sein. Vom Gehäuse 16 ausgehend erstreckt sich über den vorderen Handgriff 14 hinaus der Messerbalken 1, der einen Längsträger 13 mit zwei linear in seiner Längsrichtung beweglich daran geführte Schermesser 2, 2' umfasst. Die beiden Schermesser 2, 2' werden gegenläufig in Längsrichtung oszillierend durch den Motor 17 angetrieben. Es kann aber auch eine Ausführung zweckmäßig sein, bei der eines der beiden Schermesser 2, 2' fest und unbeweglich mit dem Längsträger 13 verbunden ist, während das jeweils andere Schermesser 2', 2 alleine oszillierend angetrieben wird. In beiden Fällen stellt sich eine gegenläufige oszillierende Relativbewegung zwischen beiden Schermessern 2, 2' ein.

Fig. 2 zeigt in einer perspektivischen Ansicht die beiden flach und unmittelbar aufeinanderliegenden Schermesser 2, 2' der Heckenschere nach Fig. 1 in einer Ausführung nach dem Stand der Technik. Demnach ist das obere Schermesser 2 auf beiden Seiten mit Schneidzähnen 3, 4 versehen, während das untere Schermesser 2' ebenfalls auf beiden Seiten korrespondierende Schneidzähne 3', 4' aufweist.

Darüber hinaus ist ein Antrieb 18 vorgesehen, der die drehende Antriebsbewegung des Motors 17 (Fig. 1) in eine linear oszillierende Längsbewegung der beiden Schermesser 2, 2' entsprechend "einem Doppelpfeil 23 umsetzt. Der Antrieb 18 kann als Kulissenantrieb ausgeführt sein. Im gezeigten Ausführungsbeispiel ist er als Kurbeltrieb ausgeführt und umfasst dazu eine Kurbelscheibe 19, die um einen zentrischen Achszapfen 20 mittels des Motors 17 (Fig. 1) drehend angetrieben wird. Auf der hier dargestellten Oberseite der Kurbelscheibe 19 ist ein exzentrisch zum Achszapfen 20 angeordneter Exzenter 21 vorgesehen, der mittels einer Gleitlagerung in das Pleuelauge eines gelenkig mit dem oberen Schermesser 2 verbundenen Pleuels 22 eingreift. Die Unterseite der Kurbelscheibe 19 ist in analoger Weise mit einem weiteren, nicht näher dargestellten Exzenter 21' und einem weiteren Pleuel 22' zum Antrieb des unteren Schermessers 2' versehen, wobei beide Exzenter 21, 21' bezogen auf die Drehachse des Achszapfens 20 um 180° versetzt angeordnet sind. Der obere Exzenter 21 ist in seiner vordersten, dem oberen Schermesser 2 zugewandten Lage gezeigt, demnach der untere, nicht dargestellte Exzenter 21' sich in seiner hintersten Lage befindet. In gleicher Weise befindet sich auch das obere Schermesser 2 in seiner vordersten Lage, während das untere Schermesser 2' in seine hinterste Lage zurückgezogen ist. Hierbei liegen die Schneidzähne 3, 4 des oberen Schermessers 2 in Überdeckung mit den Schneidzähnen 3', 4' des unteren Schermessers 2'. Ausgehend von der gezeigten Lage nach Fig. 2 führt eine Drehung der Kurbelscheibe 19 zu einer oszillierenden, um 180° phasenversetzt gegenläufigen Relativbewegung der beiden Schermesser 2, 2' gegeneinander entsprechend dem Doppelpfeil 23. In der hier nicht dargestellten gegenüberliegenden Extremposition, bei der der obere Exzenter 21 samt dem zugehörigen oberen Schermesser 2 seine hinterste Position einnimmt, und bei der der untere, nicht dargestellte Exzenter 21' samt dem zugehörigen Schermesser 2' seine vorderste Position einnimmt, liegen ebenfalls die Schneidzähne 3, 4 des oberen Schermessers 2 in vollständiger Überdeckung mit den zugeordneten Schneidzähnen 3', 4' des unteren Schermessers 2'.

Fig. 3 zeigt in einer Draufsicht die Anordnung nach Fig. 2, demnach die Schneidzähne 3, 4 auf beiden Seiten 11, 12 des Schermessers 2 in regelmäßigen und gleichen Abständen b zueinander angeordnet sind.

Der Exzenter 21 weist gegenüber dem Achszapfen 20 der Kurbelscheibe 19 eine Exzentrizität auf. Hieraus ergibt sich ein Hub h des Schermessers 2, der das Doppelte der genannten Exzentrizität zum Achszapfen 20 beträgt. Der Abstand b zwischen zwei unmittelbar benachbarten Schneidzähnen 3, 4 ist doppelt so groß wie der einzelne Hub h des Schermessers 2.

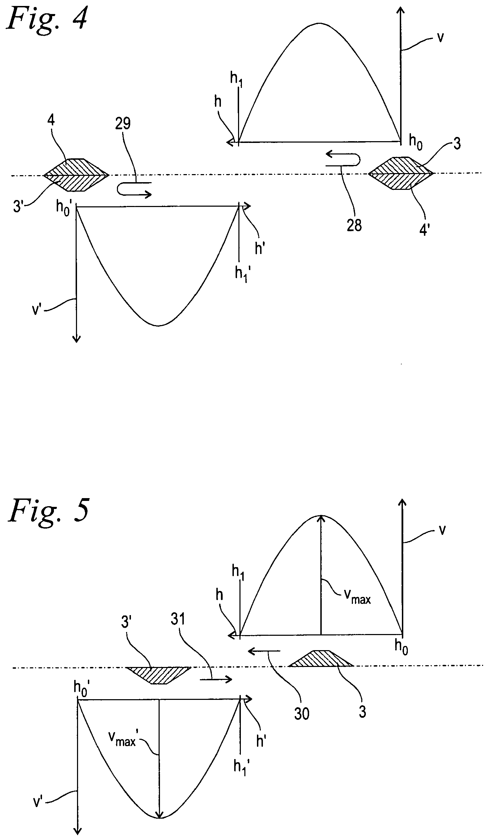

Analog das Gleiche gilt auch für den Abstand b zwischen zwei unmittelbar benachbarten Schneidzähnen 3', 4' des unteren Schermessers 2' (Fig. 2) und den zugehörigen, in den Fig. 4 bis 7 dargestellten Hub h' des unteren Schermessers 2' (Fig. 2), wobei der Hub h des oberen Schermessers 2 gleich dem Hub h' des unteren Schermessers 2' ist, und wobei für alle Schneidzähne 3, 4, 3', 4' der gleiche Abstand b gilt.

Aus dem einzelnen Hub h des oberen Schermessers 2 und dem einzelnen Hub h' des unteren Schermessers 2' lässt sich durch Aufaddieren ein gesamter Relativhub zwischen den beiden Schermessern 2, 2' bilden. Der Abstand b zwischen zwei benachbarten Schneidzähnen 3, 4, 3', 4' ist in der Ausführung nach den Fig. 2, 3 gleich dem genannten gesamten Relativhub bzw. gleich der Summe des Hubes h und des Hubes h'. Durch die vorgenannte Relation zwischen den Abständen b und dem Hub h, h' ist auf beiden Seiten 11, 12 der Schermesser 2, 2' je ein Rückschnittbereich bzw. ein Grobschnittbereich 10 ausgebildet, mit dem gröbere Äste, Zweige oder anderes Schnittgut spanlos und scherend durchtrennt werden können.

Die Fig. 4 bis 7 zeigen in schematischer Seitenansicht Schneidzähne 3, 4 des oberen Schermessers 2 (Fig. 1 bis 3) in ihrer Wechselwirkung mit Schneidzähnen 3', 4' des unteren Schermessers 2' (Fig. 1 bis 3). Außerdem ist beispielhaft für die Schneidzähne 3, 3' der Verlauf ihrer Geschwindigkeit v, v' über dem jeweils zugehörigen Hub h, h' entsprechend der oszillierenden Längsbewegung in Richtung des Doppelpfeiles 23 (Fig. 2) aufgetragen.

Nach Fig. 4 befinden sich die Schneidzähne 3, 3' in einem ersten Umkehrpunkt h₀, h₀', in dem sie samt ihrer zugehörigen Schermesser 2, 2' (Fig. 1, 3) eine Richtungsumkehr ihrer Bewegung entsprechend Pfeilen 28, 29 erfahren. In diesem Zustand ist die Einzelgeschwindigkeit v, v' der Schneidzähne 3, 4, 3', 4' gleich null. Hiervon ausgehend steigt die jeweilige Geschwindigkeit v, v' in Form einer halben Sinuskurve zunächst an und fällt dann wieder ab, bis sie an zweiten Umkehrpunkten h₁, h₁' wieder zu null wird. Die Streckendifferenz zwischen den Umkehrpunkten h₁, h₀ bzw. h₁', h₀' entspricht dem maximalen Hub h, h' der Schneidzähne 3, 4, 3', 4' bzw. der zugehörigen Schermesser 2, 2' (Fig. 1 bis 3).

Ausgehend vom ersten Umkehrpunkt h₀, h₀' nach Fig. 4 bewegen sich zwei Schneidzähne 3, 3' entsprechend Pfeilen 30, 31 aufeinander zu, wie dies in Fig. 5 dargestellt ist. Entsprechend dem halbsinusförmigen Verlauf ihrer Geschwindigkeiten v, v' erreichen sie einzelne maximale Geschwindigkeiten vₘₐₓ, vₘₐₓ', ohne dass die Schneidzähne 3, 3' der beiden Schermesser 2, 2' aufeinandertreffen.

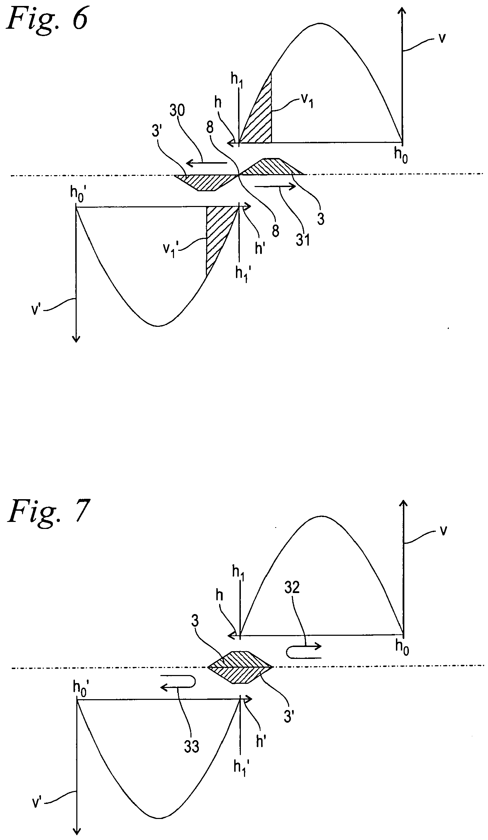

Erst zu einem späteren Zeitpunkt wirken die beiden Schneidzähne 3, 3' scherend zusammen, indem sie mit ihren angrenzenden Scherschneiden 8 entsprechend der Darstellung nach Fig. 6 aufeinandertreffen. Hierbei weisen die beiden Schneidzähne 3, 3' jeweils eine einzelne Geschwindigkeit v₁, v₁' auf, die deutlich geringer ist als die maximale Geschwindigkeit vₘₐₓ bzw. vₘₐₓ' nach Fig. 5.

Schließlich erreichen die beiden Schneidzähne 3, 3' ihre zugehörigen zweiten Umkehrpunkte h₁, h₁' entsprechend der Darstellung nach Fig. 7, wobei die beiden Schneidzähne 3, 3' einander vollständig überdecken. Hierbei sind die zugeordneten Einzelgeschwindigkeiten v, v' jeweils gleich null. Ausgehend davon erfolgt eine Umkehr der Bewegungsrichtung entsprechend Pfeilen 32, 33, woraufhin der Bewegungszyklus nach den Fig. 4 bis 7 in umgekehrter Reihenfolge abläuft.

Durch die vorgenannten geometrischen Beziehungen zwischen den Abständen b, dem Hub h und dem Hub h' folgt, dass im Laufe einer Bewegungsrichtung nur ein einzelner Schnitt bei den aufeinandertreffenden Schneidzähnen 3, 3' stattfindet, was in analoger Weise auch für aufeinandertreffende Schneidzähne 4, 4' gilt. Neben diesem einzelnen Schnitt findet zwischen den beiden Umkehrpunkten h₀, h₁ bzw. h₀', h₁' kein weiterer Schnitt statt. Außerdem ergibt sich aus der Zusammenschau der Fig. 6, 7, dass dieser Schnittvorgang in einem Geschwindigkeitsbereich stattfindet, der durch die Geschwindigkeiten v₁, v₁' nach Fig. 6 und die Geschwindigkeiten v, v' gleich null nach Fig. 7 entsprechend der schraffierten Darstellung in Diagrammen nach Fig. 6 eingegrenzt ist. Die Geschwindigkeiten v, v' dieser in Fig. 6 schraffiert dargestellten Geschwindigkeitsbereiche, in denen die einander zugeordneten Schneidzähne 3, 3' in Wechselwirkung miteinander stehen, sind im Betrag deutlich geringer als die jeweiligen Maximalgeschwindigkeiten vₘₐₓ, vₘₐₓ' nach Fig. 5.

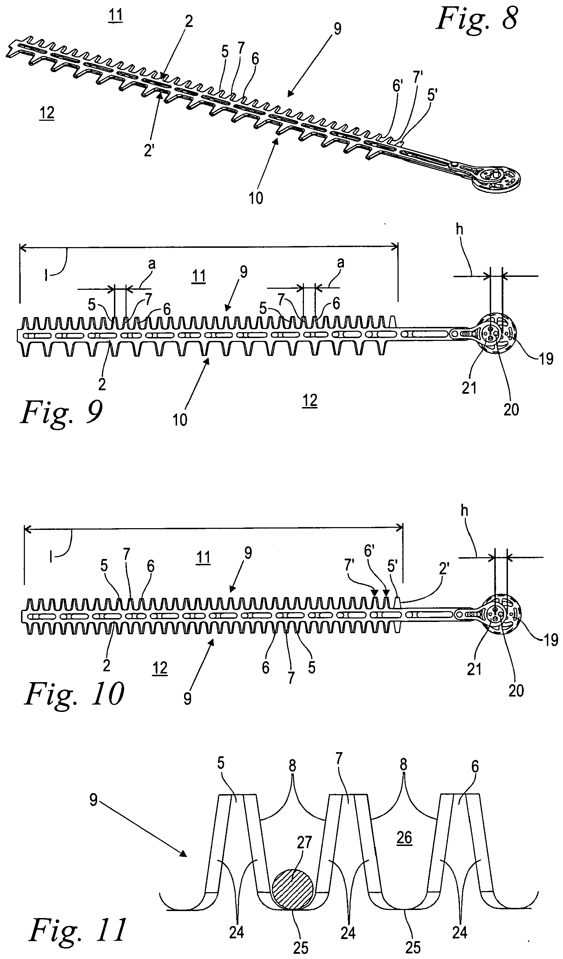

Fig. 8 zeigt in einer perspektivischen Ansicht ein erstes erfindungsgemäßes Ausführungsbeispiel von Schermessern 2, 2' für den Einsatz in einem Messerbalken 1 einer Heckenschere nach Fig. 1. Auf einer Seite 12 sind die Schermesser 2, 2' durchgängig mit einem Grobschnittbereich 10 versehen, der in seiner Ausgestaltung identisch zu dem Grobschnittbereich 10 auf der Seite 12 nach Fig. 3 ist, und für den der gleiche Bewegungsablauf gilt. Auf der gegenüberliegenden Seite 11 sind die Schermesser 2, 2' mit einem Trimmschnittbereich 9 ausgeführt, wozu das obere Schermesser 2 mit Schneidzähnen 5, 6, 7 und das untere Schermesser 2' mit Schneidzähnen 5', 6', 7' versehen ist.

Fig. 9 zeigt in einer Draufsicht die Anordnung nach Fig. 8, demnach zwei unmittelbar benachbarte Schneidzähne 3, 4 des Grobschnittbereiches 10 genauso wie in der Ausführungsform nach den Fig. 2 und 3 in einem Abstand b zueinander liegen. Auf der gegenüberliegenden Seite 11 sind unmittelbar zueinander benachbarte Schneidzähne 5, 6, 7, 5', 6', 7' bezogen auf die Längsrichtung der Schermesser 2, 2' in einem Abstand a zueinander angeordnet.

Der Antrieb 18 samt Kurbelscheibe 19, Achszapfen 20, Exzenter 21 und Pleuel 22 ist identisch zur Ausführungsform nach den Fig. 2 und 3 ausgeführt, so dass sich der gleiche Hub h, h' und die gleiche Relation zum Abstand b im Grobschnittbereich 10 entsprechend den Darstellungen nach den Fig. 4 bis 7 ergeben.

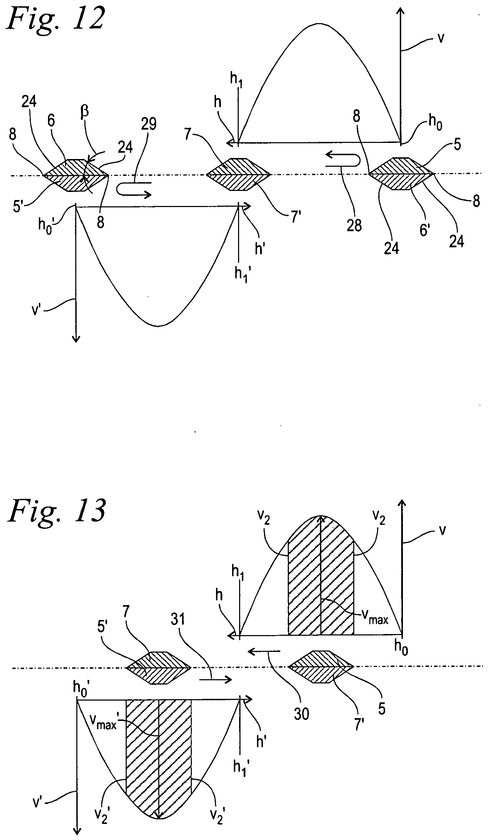

Der Abstand b zwischen zwei benachbarten Schneidzähnen 3, 4 im Grobschnittbereich 10 ist jedoch größer als der Abstand a zwischen zwei benachbarten Schneidzähnen 5, 6, 7, 5', 6', 7' im Trimmschnittbereich 9 und beträgt im gezeigten Ausführungsbeispiel das Doppelte davon. Dies führt dazu, dass ein einzelner Abstand a zwischen zwei unmittelbar benachbarten Schneidzähnen 5, 6, 7, 5', 6', 7' im Trimmschnittbereich 9 gleich dem einzelnen Hub h des oberen Schermessers 2 bzw. gleich dem einzelnen Hub h' (Fig. 12 bis 15) des unteren Schermessers 2' (Fig. 8) ist. Damit ist der Abstand a auch gleich der Hälfte der Summe des Hubes h des einen Schermessers 2 und des Hubes h' des anderen Schermessers 2'.

Außerdem kann aus den vorgenannten geometrischen Beziehungen abgeleitet werden, dass zwischen ersten Schneidzähnen 5, 5' und zweiten Schneidzähnen 6, 6' der beiden Schermesser 2, 2' jeweils mindestens ein, hier genau ein dritter Schneidzahn 7, 7' angeordnet ist. Die dritten Schneidzähne 7, 7' liegen also unmittelbar benachbart zwischen jeweils einem ersten Schneidzahn 5, 5' und einem zweiten Schneidzahn 6, 6'. Außerdem ist der Abstand eines einzelnen ersten Schneidzahnes 5, 5' im Trimmschnittbereich 9 zum übernächsten, also zweiten Schneidzahn 7, 7' gleich dem Abstand b zwischen zwei unmittelbar benachbarten Schneidzähnen 3, 4, 3', 4' des Grobschnittbereiches 10.

Fig. 10 zeigt eine nicht patentgemäße Variante der Anordnung nach den Fig. 8 und 9, demnach beide Seiten 11, 12 als Trimmschnittbereich 9 mit Schneidzähnen 5, 6, 7, 5', 6', 7' nach obigen Maßgaben ausgeführt sind. Hierbei kommen zwei gleiche Schermesser 2, 2' im Messerbalken 1 zum Einsatz, von denen das untere Schermesser 2' bezogen auf seine Längsachse um 180° gedreht und von unten gegen das obere Schermesser 2 geklappt ist. Beide Schermesser 2, 2' sind bezogen auf den beidseitigen Trimmschnittbereich 9 derart symmetrisch ausgebildet, dass die Schneidzähne 5, 6, 7, 5', 6', 7' im Trimmschnittbereich 9 spiegelsymmetrisch zur Längsachse der Schermesser 2, 2' angeordnet sind.

In den Fig. 9 und 10 ist erkennbar, dass der Messerbalken 1 (Fig. 1) eine für den auszuführenden Schnitt nutzbare Länge 1 aufweist, entlang derer sich die Schneidzähne 3, 4, 5, 6, 7 und Schneidzähne 3', 4', 5', 6', 7' erstrecken. In beiden Fällen erstrecken sich die Trimmschnittbereiche 9 über die gesamte nutzbare Länge 1. Das Gleiche gilt auch für den Grobschnittbereich 10 nach Fig. 9. Es kann aber auch zweckmäßig sein, einen nur verkürzten Trimmschnittbereich 9 vorzusehen, an den sich auf der gleichen Seite 11, 12 in Richtung der nutzbaren Länge 1 ein Grobschnittbereich 10 anschließt.

Die Schermesser 2, 2' sind lösbar mit dem Antrieb 18 sowie mit dem Längsträger 13 des Messerbalkens 1 (Fig. 1) verbunden und deshalb auswechselbar. Es können also nach Wahl und Bedarf Schermesser 2, 2' in der Ausführungsform nach den Fig. 2, 3, in der Ausführungsform nach den Fig. 8, 9 oder in der Ausführungsform nach Fig. 10 eingesetzt werden. Außerdem kann eine Ausführung zweckmäßig sein, bei der unterschiedliche Messerbalken 1 (Fig. 1) mit den verschiedenen vorgenannten Varianten der Schermesser 2, 2' ausgestattet sind und als Gesamtheit austauschbar sind. Insbesondere kann ein weiterer Messerbalken mit mindestens einem Grobschnittbereich 10 und ohne Trimmschnittbereich 9 beispielsweise nach den Fig. 2 bis 7 vorgesehen sein, wobei der Messerbalken 1 mit dem mindestens einen Trimmschnittbereich 9 entsprechend den Fig. 1 und 8 bis 17 gegen den weiteren Messerbalken ohne Trimmschnittbereich 9 auswechselbar ist.

Fig. 11 zeigt in einer vergrößerten Detaildarstellung Einzelheiten zur geometrischen Ausgestaltung der Schneidzähne 5, 6, 7 im Trimmschnittbereich 9. Demnach weisen die Schneidzähne 5, 6, 7 einen trapezförmigen Grundriss auf, wobei bezogen auf die Längsrichtung des Messerbalkens 1 und der Schermesser 2, 2' (Fig. 1) zwischen ihnen jeweils ein ebenfalls trapezförmiger Schnittraum 26 verbleibt. Die Schneidzähne 5, 6, 7 erstrecken sich quer zur Längsachse des Messerbalkens 1 (Fig. 1), ausgehend von einem Zahngrund 25 bis hin zu äußeren freien Enden, und sind an ihren den Schnitträumen 26 zugewandten Flanken beidseitig mit Schliffschrägen 24 zur Bildung von Scherschneiden 8 versehen. Die Schliffschrägen 24 und die Scherschneiden 8 erstrecken sich ausgehend von den äußeren Zahnspitzen bis hin zum Zahngrund 25. Der Zahngrund 25 ist hinreichend breit, dass schematisch dargestelltes Schnittgut 27 mit zumindest näherungsweise kreisrundem Querschnitt zwischen einander zugewandten Scherschneiden 8 bis hin zum Zahngrund 25 in den Schnittraum 26 eingeführt werden kann und dabei vollständig zwischen zwei einander zugewandten Scherschneiden 8 liegt. Die Schneidzähne 5', 6', 7' des weiteren Schermessers 2' (Fig. 8 bis 10) sind in gleicher Weise ausgestaltet. Außerdem gilt sinngemäß das Gleiche für die Schneidzähne 3, 4, 3', 4' der Schermesser 2, 2' (Fig. 8 bis 10) im Grobschnittbereich 10.

Fig. 12 zeigt in einer Querschnittsdarstellung die Schneidzähne 5, 6, 7 des oberen Schermessers 2 und die Schneidzähne 5', 6', 7' des unteren Schermessers 2' (Fig. 8 bis 11) im zugehörigen Trimmschnittbereich 9, demnach die Schneidzähne 5, 6, 7 flach und spaltfrei direkt auf den zugeordneten Schneidzähnen 5', 6', 7' des unteren Schermessers 2' aufliegen. Sie sind einschließlich der zugeordneten Schermesser 2, 2' insgesamt aus flachem, ebenem Stahlblech gebildet und nur auf ihren einander abgewandten Seiten mit den jeweiligen Schliffschrägen 24 versehen. Dies führt dazu, dass im Falle der Überdeckung der Schneidzähne 5, 6, 7 mit den weiteren Schneidzähnen 5', 6', 7' die zugeordneten Scherschneiden 8 direkt aufeinandertreffen.

Außerdem bilden die einander zugewandten Flachseiten der Schneidzähne 5, 6, 7, 5', 6', 7' mit den zugeordneten Schliffschrägen 24 an der jeweiligen Scherschneide 8 einen Keilwinkel β. Da die vorgenannten Flachseiten parallel zur Bewegungsrichtung verlaufen, ist der genannte Keilwinkel β auch gleich dem Schnittwinkel und beträgt ≤ 45°, hier etwa 30°. Dies gilt in gleicher Weise auch für die Schneidzähne 3, 4, 3', 4' im Grobschnittbereich 10 nach den Fig. 8 und 9. Insgesamt sind damit sämtliche Schneidzähne 3, 4, 5, 6, 7, 3', 4', 5', 6', 7' mit solchen Scherschneiden 8 versehen und damit zum spanlosen, scherenden Durchtrennen des Schnittgutes 27 (Fig. 11) in Abgrenzung gegenüber einem spanabhebenden Sägeschnitt ausgelegt.

Die Fig. 12 bis 15 zeigen in schematischer Seitenansicht das Zusammenspiel der Schneidzähne 5, 6, 7 des einen Schermessers 2 mit den Schneidzähnen 5', 6', 7' des anderen Schermessers 2' im Trimmschnittbereich 9 (Fig. 8 bis 11). Wie auch in den Fig. 4 bis 7 ist hier beispielhaft für die ersten Schneidzähne 5, 5' jeweils der Verlauf der einzelnen Geschwindigkeiten v, v' über dem zugehörigen Hub h, h' aufgetragen. Analog zur Darstellung nach den Fig. 4 bis 7 führen die Schneidzähne 5, 6, 7 und die Schneidzähne 5', 6', 7' zwischen ersten Umkehrpunkten h₀, h₀', und zweiten Umkehrpunkten h₁, h₁' oszillierende Bewegungen mit einem halbsinusförmigen Verlauf der zugehörigen Geschwindigkeit v, v' aus. Dabei führen sie analog zur Darstellung nach den Fig. 4 bis 7 zwischen den Umkehrpunkten h₀, h₁, h₀', h₁' Relativbewegungen entsprechend den Pfeilen 28, 29, 30, 31, 32, 33 aus.

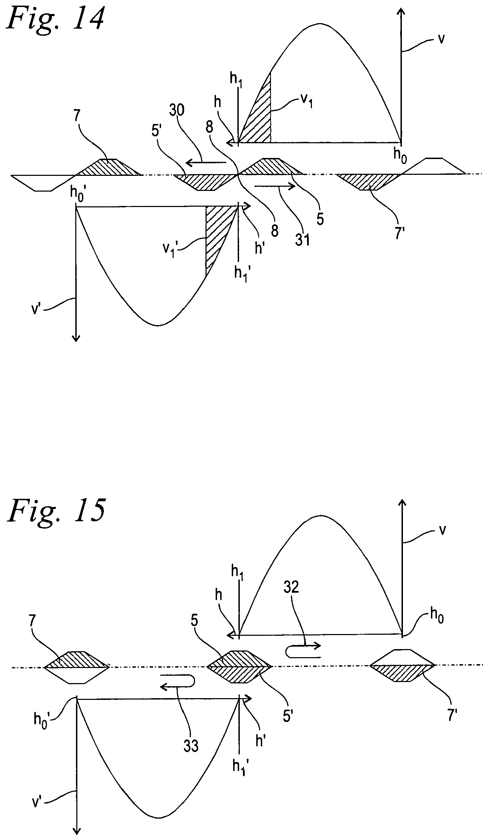

Im Bereich der ersten Umkehrpunkte h₀, h₀' liegen nach Fig. 12 die ersten Schneidzähne 5, 5' in Überdeckung mit den in Hochrichtung gegenüberliegenden zweiten Schneidzähnen 6', 6. In den zweiten Umkehrpunkten h₁, h₁' nach Fig. 15 liegt der erste Schneidzahn 5 in Überdeckung mit dem in der Hochrichtung gegenüberliegenden ersten Schneidzahn 5'. In beiden Fällen ist die Geschwindigkeit v der ersten Schneidzähne 5, 5' gleich null. Dies gilt auch für alle übrigen Schneidzähne 6, 7, 6', 7'.

Ausgehend von den ersten Umkehrpunkten h₀, h₀' bewegen sich die ersten Schneidzähne 5, 5' entsprechend Pfeilen 30, 31 aufeinander zu, wie dies in Fig. 13 dargestellt ist. Da aber abweichend von der Darstellung nach den Fig. 4 bis 7 zwischen den ersten Schneidzähnen 5, 5' und den zweiten Schneidzähnen 6, 6' noch dritte Schneidzähne 7, 7' angeordnet sind, überstreichen die ersten Schneidzähne 5, 5' diese dritten Schneidzähne 7', 7 vollständig mit einer Geschwindigkeit v, v', was sich aus der vorstehend im Zusammenhang mit Fig. 9 beschriebenen geometrischen Abstimmung der Abstände a zwischen den Schneidzähnen 5, 6, 7, 5', 6', 7' mit dem Hub h und mit dem Hub h' ergibt. Aus den Geschwindigkeitsdiagrammen nach Fig. 13 erfolgt dieses vollständige Überstreichen mit Geschwindigkeiten v, v', die entsprechend den dort schraffiert dargestellten Bereichen durch Geschwindigkeiten v₂, v₂' begrenzt sind, und die die jeweiligen Maximalgeschwindigkeiten vₘₐₓ, vₘₐₓ' mit einschließen.

Im weiteren Verlauf ihres Weges treffen die Schneidzähne 5 auf die Schneidzähne 5' entsprechend der Darstellung nach Fig. 14 mit gegenüber den Geschwindigkeiten v₂, v₂' nach Fig. 13 verringerten Geschwindigkeiten v₁, v₁', wobei sich die gleichen Verhältnisse wie im Zusammenhang mit Fig. 6 beschrieben einstellen.

Aus den vorstehenden Ausführungen wird ersichtlich, dass der spanlose Scherschnitt beim Überstreichen der dritten Schneidzähne 7', 7 mittels der ersten Schneidzähne 5, 5' nach Fig. 13 bei höheren Geschwindigkeiten v, v' erfolgt als beim spanlosen Scherschnitt entsprechend den Darstellungen nach den Fig. 6, 14. Es wird davon ausgegangen, dass durch diese erhöhten einzelnen Geschwindigkeiten v, v' das Schnittergebnis insbesondere bei dünnem, nachgiebigem bzw. zähem Schnittgut 27 (Fig. 11) verbessert wird. Außerdem erfolgt im Trimmschnittbereich 9 (Fig. 8 bis 10) abweichend vom Grobschnittbereich 10 (Fig. 3 bis 9) während eines einzelnen Hubes h in nur einer Richtung ein zweifacher Trennschnitt, nämlich beim Zusammentreffen der ersten Schneidzähne 5, 5' mit den dritten Schneidzähnen 7', 7 nach Fig. 13, sowie beim Zusammentreffen der ersten Schneidzähne 5, 5' nach Fig. 14, wodurch die Schnittleistung erhöht wird. Für gröberes Schnittgut 27 (Fig. 11), welches nicht ohne weiteres in die engen Schnitträume 26 zwischen den Schneidzähnen 5, 6, 7 des Trimmschnittbereiches 9 nach Fig. 11 eingeführt werden kann, kann aber nach Bedarf der Grobschnittbereich 10 nach den Fig. 8, 9 eingesetzt werden, dessen Schnittablauf demjenigen der Fig. 4 bis 7 entspricht.

Die vorgenannten Schnittabläufe im Trimmschnittbereich 9 nach den Fig. 12 bis 15 sind beispielhaft für erste Schneidzähne 5, 5' im Zusammenhang mit dritten Schneidzähnen 7', 7 dargestellt. Sinngemäß das Gleiche gilt aber für jeden anderen Schneidzahn 5, 6, 7, 5', 6', 7' der beiden Schermesser 2, 2' im Trimmschnittbereich 9 (Fig. 8 bis 11). Sofern nicht anders angegeben, stimmen im Übrigen die Schneidzähe 3, 4, 3', 4' des Grobschnittbereiches 10 in ihren weiteren Merkmalen und Bezugszeichen mit denjenigen der Schneidzähne 5, 6, 7, 5', 6', 7' des Trimmschnittbereiches 9 überein.

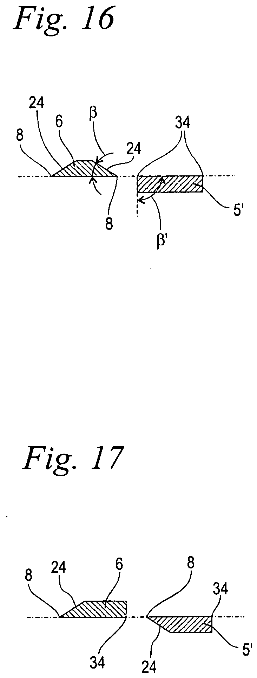

Fig. 16 zeigt eine alternative Ausführungsform der Anordnung nach den Fig. 12 bis 15. Hierbei sind nicht sämtliche Schneidzähne 5, 6, 7, 5', 6', 7' mit scharf geschliffenen Scherschneiden 8 versehen. Stattdessen ist hier beispielhaft ein Schneidzahn 6 und ein weiterer damit zusammenwirkender Schneidzahn 5' dargestellt. Der Schneidzahn 6 ist in gleicher Weise wie vorstehend beschrieben mit zwei scharf geschliffenen Scherschneiden 8 und zugehörigen Schliffschrägen 24 versehen, wobei die Scherschneiden 8 den vorstehend beschriebenen Keilwinkel β aufweisen. Der damit zusammenwirkende Schneidzahn 5' weist jedoch keine solche Scherschneiden 8, sondern stattdessen Kanten 34 mit einem stumpferen Keilwinkel β' auf. Der Keilwinkel β' beträgt im gezeigten Ausführungsbeispiel ca. 90°, kann aber auch einen abweichenden Betrag aufweisen. Es sind hier nur beispielhaft zwei Schneidzähne 6, 5' in ihrem Zusammenwirken dargestellt. Zweckmäßig sind aber auch die übrigen Schneidzähne 5, 7, 6', 7' wechselseitig mit Scherschneiden 8 oder mit Kanten 34 versehen. Während des Schnittzyklus nach den Fig. 12 bis 15 trifft im Ausführungsbeispiel nach Fig. 16 immer eine scharf geschliffene Scherschneide 8 auf eine Kante 34, wodurch ebenfalls der vorstehend beschriebene spanlose Scherschnitt herbeigeführt wird.

Fig. 17 zeigt eine Variante der Anordnung nach Fig. 16, wobei beide zusammenwirkende Schneidzähne 6, 5' mit je einer scharfen Scherschneide 8 und je einer stumpfen Kante 34 versehen sind. Das Gleiche gilt auch für die übrigen, nicht dargestellten Schneidzähne 5, 7, 6', 7'. Die Scherschneiden 8 und Kanten 34 sind in gleicher Weise wie im Ausführungsbeispiel nach Fig. 16 ausgeführt. Auch hier treffen während des Schnittzyklus nach den Fig. 12 bis 15 jeweils scharfe Scherschneiden 8 auf stumpfe Kanten 34 zur Erzeugung des spanlosen Scherschnittes.

Die vorstehend dargestellten und beschriebenen geometrischen sowie kinematischen Beziehungen sind an einem Ausführungsbeispiel erläutert, bei dem beide Schermesser 2, 2' zwischen zwei Umkehrpunkten h₀, h₁, h₀', h₁' gegenläufig oszillierend bewegbar sind, wobei der Hub h des einen Schermessers 2 den gleichen Betrag aufweist wie der Hub h' des anderen Schermessers 2'. Die geometrischen und kinematischen Beziehungen gelten aber in gleicher bzw. analoger Weise auch für Ausführungsformen, bei denen sich der Hub h des einen Schermessers 2 vom Hub h' des anderen Schermessers 2' dem Betrag nach unterscheidet. Insbesondere gelten die genannten Beziehungen auch für solche erfindungsgemäße Ausführungsformen, bei denen nur ein Schermesser 2 um einen Hub h zwischen zwei Umkehrpunkten h₀, h₁ oszillierend bewegbar ist, während das andere Schermesser 2' relativ zum Messerbalken 1 feststeht. Für dieses feststehende Schermesser 2' gilt dann, dass sein Hub h' gleich null ist, und dass die zugehörigen Umkehrpunkte h₀', h₁' aufeinander fallen.

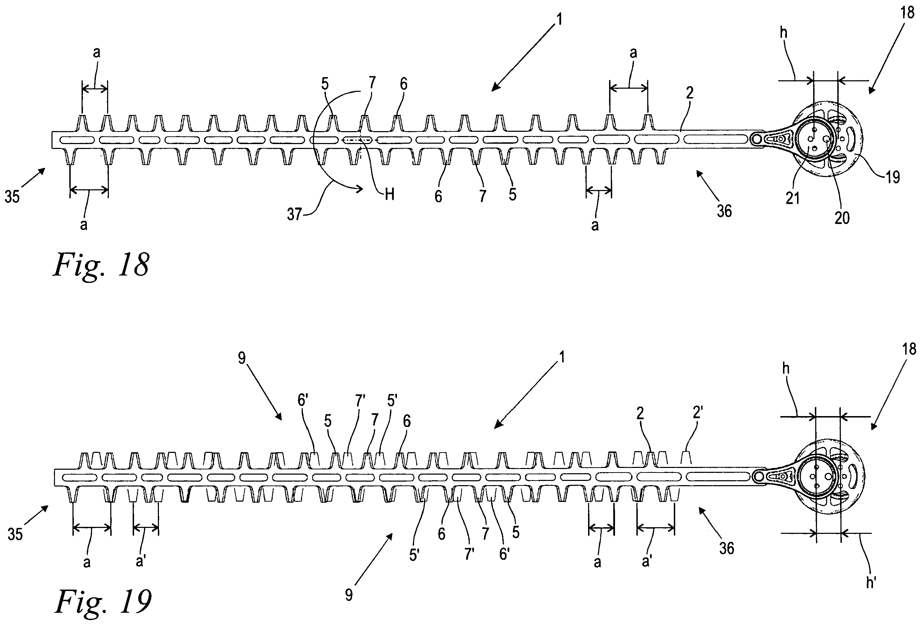

Die Fig. 18 bis 23 zeigen noch weitere, nicht patentgemäße Ausführungsformen. Fig. 18 zeigt in einer Draufsicht eine Ausführungsform eines Messerbalkens 1, bei dem neben dem Antrieb 18 der besseren Übersichtlichkeit halber nur ein einzelnes Schermesser 2 dargestellt ist. Das weitere Schermesser 2' ist der Vollständigkeit halber andeutungsweise noch in Fig. 19 dargestellt.

Der Messerbalken 1 weist bezogen auf seine Längsrichtung ein zum Antrieb 18 entfernt liegendes Ende 35 sowie ein gegenüberliegendes, zum Antrieb 18 benachbartes Ende 36 auf. Anders als bei den Schermessern 2, 2' der vorstehend beschriebenen Ausführungsbeispiele, bei denen die Abstände a, b zwischen den Schneidzähnen 5, 6, 7, 5', 6', 7' entlang der gesamten Erstreckung der Schermesser 2, 2' konstant sind, sind im gezeigten Ausführungsbeispiel unterschiedlich bzw. ungleichmäßig verteilte Abstände a zwischen den Schneidzähnen 5, 6, 7, 5', 6', 7' innerhalb der beiderseitig angeordneten Trimmschnittbereiche 9 gewählt. Auf der einen Seite des Schermessers 2 sind die Abstände a im Bereich des Endes 35 kleiner als im Bereich des gegenüberliegenden Endes 36, wobei die Abstände a ausgehend von dem einen Ende 35 zu dessen gegenüberliegenden Enden 36 hin in zumindest näherungsweise gleichen Inkrementen größer werden. Auf der gegenüberliegenden Seite des gezeigten Schermessers 2 ist es genau umgekehrt: Dort werden die Abstände a vom Ende 35 aus zum gegenüberliegenden Ende 36 hin in zumindest näherungsweise gleichen Inkrementen kleiner. Der kleinste Abstand a auf jeder Seite ist gleich der Hälfte der Summe des Hubes h des einen Schermessers 2 und des Hubes h' des anderen Schermessers 2' (Fig. 19). Da beide Schermesser 2, 2' (Fig. 19) gleich ausgeführt sind, und den gleichen Hub h, h' ausführen, ist also der kleinste Abstand a gleich dem Hub h oder gleich dem Hub h'. Hiervon ausgehend sind die übrigen Abstände a größer und erreichen einen Maximalwert bevorzugt bis hin zum Doppelten des kleinsten Abstands a.

Die entlang der Länge der Schermesser 2, 2' variierenden Abstände a, a' werden dadurch herbeigeführt, dass die Breite der einzelnen Schneidzähne 5, 6, 7 zumindest näherungsweise gleich ist, während die Breiten der Zahnzwischenräume variieren.

Im Betrieb kommen zwei gleiche Schermesser 2, 2' zum Einsatz, wobei das zweite Schermesser 2' gegenüber dem ersten Schermesser 2 bezogen auf seine Längsachse um 180° gedreht und von unten gegen das obere Schermesser 2 geklappt ist. Dieser Fall ist in Fig. 19 dargestellt, wobei das zweite Schermesser 2' mit seinen Schneidzähnen 5', 6', 7' und den zugeordneten Abständen a' in Fig. 19 nur gestrichelt angedeutet ist. Auf beiden Seiten des Messerbalkens 1 ist je ein Trimmschnittbereich 9 vorgesehen. Hierzu sind beide Schermesser 2, 2' innerhalb der beidseitigen Trimmschnittbereiche 9 derart symmetrisch ausgebildet, dass ihre Schneidzähne 5, 6, 7, 5', 6', 7' im Trimmschnittbereich 9 rotationssymmetrisch zu einer mittig senkrecht auf dem Trimmschnittbereich 9 und senkrecht zur Zeichnungsebene stehenden Hochachse angeordnet sind. Mit anderen Worten bedeutet die Rotationssymmetrie aus der Zusammenschau der Fig. 18, 19, dass die gesamte Anordnung der Schneidzähne 5, 6, 7, 5', 6', 7' auf einer Seite des Schermessers 2, 2' durch Drehung um 180° mit der gesamten Anordnung der Schneidzähne 5, 6, 7, 5', 6', 7' auf der gegenüberliegenden Seite des gleichen Schermessers 2, 2' in Überdeckung gebracht werden können, wenn die gedachte 180°-Drehung entsprechend einem Pfeil 37 um eine gedachte Hochachse H erfolgt, die senkrecht zur Ebene des jeweiligen Schermessers 2, 2' steht, und die dabei mittig durch den Trimmschnittbereich 9 bzw. durch den Bereich mit den Schneidzähnen 5, 6, 7, 5', 6', 7' verläuft.

Aus der Zusammenschau der Fig. 18, 19 und den obigen Ausführungen ergibt sich, dass auf einer Seite des Messerbalkens 1 die Abstände zwischen den Schneidzähnen 5, 6, 7 von dem einen Ende 35 aus zum gegenüberliegenden Ende 36 hin größer werden, während die Abstände a' zwischen den Schneidzähnen 5', 6', 7' des zugeordneten anderen Schermessers 2' auf der gleichen Seite des Messerbalkens und vom gleichen Ende 35 aus zu dessen gegenüberliegenden Ende 36 hin kleiner werden. Auf der gegenüberliegenden Seite des Messerbalkens 1 ist dies entsprechend der oben genannten Rotationssymmetrie genau umgekehrt: Dort werden die Abstände zwischen den Schneidzähnen 5, 6, 7 von dem einen Ende 35 aus zum gegenüberliegenden Ende 36 hin kleiner, während die Abstände a' zwischen den Schneidzähnen 5', 6', 7' des zugeordneten anderen Schermessers 2' vom gleichen Ende 35 aus zu dessen gegenüberliegenden Ende 36 hin größer werden. Hieraus ergibt sich, dass der Messerbalken 2 im Bereich seiner kleinen Abstände a zusammen mit dem Messerbalken 2' im Bereich mit großen Abständen a' und umgekehrt zusammenarbeitet. Der zeichnerischen Darstellung nach Fig. 19 ist zu entnehmen, dass nicht sämtliche Schneidzähne 5, 6, 7, 5', 6', 7' gleichzeitig eine Scherung ausführen. Vielmehr führen zu einem bestimmten Zeitpunkt nur einige Schneidzähne 5, 6, 7, 5', 6', 7' eine Scherung aus, während zum gleichen Zeitpunkt an anderer Stelle Freiräume dazwischen zum Einführen des Schnittgutes verbleiben. Im Verlauf des Hubes h, h' wird aber in sämtlichen Abschnitten des Messerbalkens 1 eine Scherung durchgeführt.

Außerdem ist zu erkennen, dass unter Beibehaltung des mit den zuvor beschriebenen Ausführungsbeispielen beschriebenen Prinzips auf beiden Seiten des Messerbalkens 1 zumindest abschnittsweise ein einzelner Schneidzahn 7 des einen Schermessers 2 von Schneidzähnen 5', 6' des anderen Schermessers 2' während des Hubes h, h' vollständig überstrichen wird.

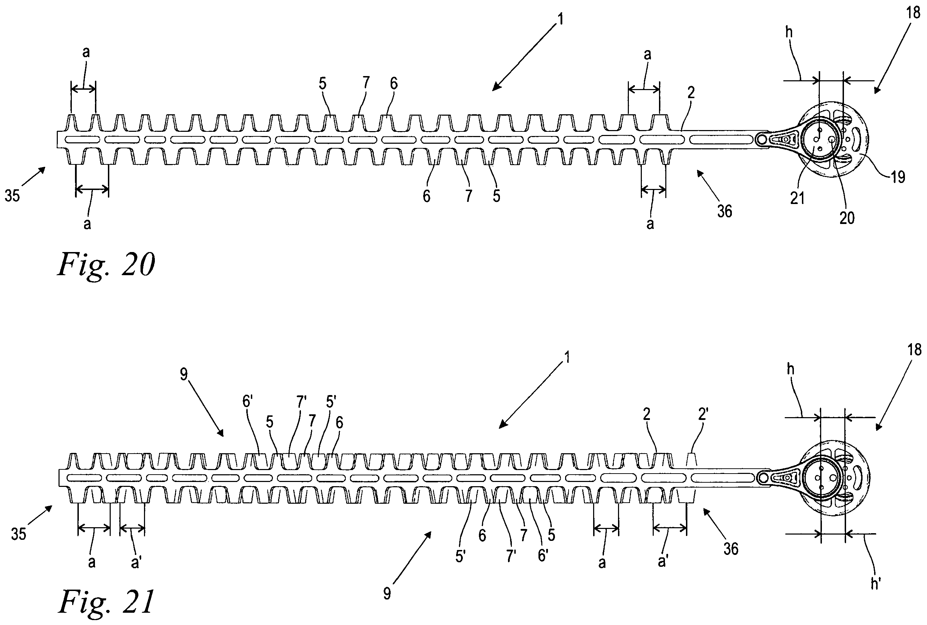

Die Fig. 20, 21 zeigen noch eine Variante der Anordnung nach den Fig. 18, 19, bei denen die unterschiedlichen Abstände a, a' zwischen den Schneidzähnen 5, 6, 7, 5', 6', 7' durch unterschiedliche Zahnbreiten bei im Wesentlichen gleich bleibenden Breiten der Zahnzwischenräume gebildet sind. Natürlich ist auch eine Kombination von variierenden Zahnbreiten mit variierenden Breiten der Zahnzwischenräume möglich. In den übrigen Merkmalen und Bezugszeichen stimmt das Ausführungsbeispiel nach den Fig. 20, 21 mit demjenigen nach den Fig. 18, 19 überein.

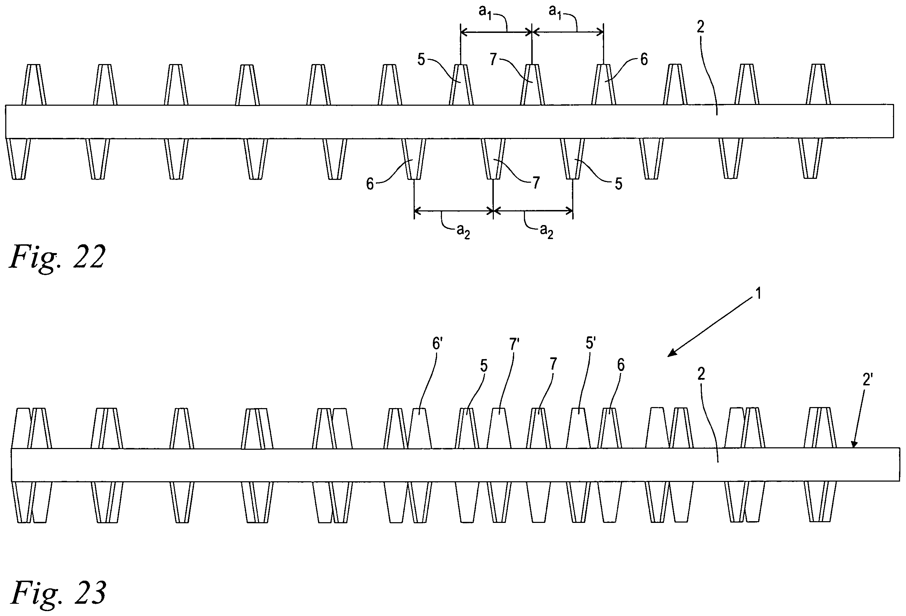

Die Fig. 18 bis 21 zeigen Ausführungsbeispiele mit variierenden Abständen a, a' zwischen den Schneidzähnen 5, 6, 7, 5', 6', 7' bei beiden Schermessern 2, 2'. Hieraus folgt, dass zumindest in einem Teilabschnitt des Trimmschnittbereiches 9 die Schneidzähne 5, 6, 7 des einen Schermessers 2 einen Abstand a zueinander aufweisen, der vom Abstand a' zwischen den zugeordneten Schneidzähnen 5', 6', 7' des anderen Schermessers 2' abweicht. Das gleiche Prinzip und damit die gleiche Funktionsweise kann aber beispielsweise auch dadurch erreicht werden, dass die Schneidzähne 5, 6, 7 des einen Schermessers 2 einen untereinander gleichen Abstand a aufweisen, und dass die Schneidzähne 5', 6', 7' des anderen Schermessers 2' ebenfalls einen untereinander gleichen Abstand a' aufweisen, wobei aber die Abstände a zwischen den Schneidzähnen 5, 6, 7 des einen Schermessers 2 von den Abständen a' zwischen den zugeordneten Schneidzähnen 5', 6', 7' des anderen Schermessers 2' abweichen. Ein solcher Fall ist schematisch in den Fig. 22, 23 dargestellt.

Fig. 22 zeigt ein Schermesser 2, dessen Schneidzähne 5, 6, 7 auf einer ersten Seite einen entlang des Schermessers 2 untereinander gleichen, konstanten Abstand a₁ zueinander aufweisen. Auf der gegenüberliegenden zweiten Seite weisen die Schneidzähne 5, 6, 7 einen entlang des Schermessers 2 untereinander gleichen, konstanten Abstand a₂ zueinander auf. Die untereinander gleichen Abstände a₁ auf der ersten Seite sind kleiner als die untereinander gleichen Abstände a₂ auf der zweiten Seite.

Im Betrieb kommen zwei gleiche Schermesser 2, 2' zum Einsatz, wobei das zweite Schermesser 2' gegenüber dem ersten Schermesser 2 bezogen auf seine Längsachse um 180° gedreht und von unten gegen das obere Schermesser 2 geklappt ist. Dieser Fall ist in Fig. 23 dargestellt, wobei die Schneidzähne 5', 6', 7' des zweiten Schermessers 2' mit ihren größeren, aber untereinander gleichen Abständen a₂ in Wechselwirkung mit den Schneidzähnen 5, 6, 7 des ersten Schermessers 2 mit ihren kleineren, aber untereinander gleichen Abständen a₁ stehen. Ebenso wie bei den Ausführungsbeispielen nach den Fig. 19, 21 stehen nicht alle Schneidzähne 5, 6, 7, 5', 6', 7' gleichzeitig in Wechselwirkung miteinander, sondern durchtrennen das Schnittgut an unterschiedlichen Orten des Messerbalkens 1 zu unterschiedlichen Zeitpunkten, also zeitversetzt zueinander. Die gesamte Anordnung einschließlich Antrieb, Lagerung etc. wird hierdurch entlastet.

Über die Ausführungsbeispiele nach den Fig. 1 bis 23 hinaus ist aber auch eine Kombination von gleichen Abständen a der Schneidzähne 5, 6, 7 des einen Schermessers 2 mit variierenden Abständen a' zwischen den Schneidzähne 5', 6', 7' des anderen Schermessers 2' möglich.

In jedem Falle ist es aber zweckmäßig, dass die Zahnabstände, die Zahnbreiten, die Zahnzwischenräume und der Hub h, h' (Fig. 21) derart aufeinander abgestimmt sind, dass möglichst alle Schneidzähne 5, 6, 7, 5', 6', 7' des einen Schermessers 2, 2' in den Umkehrpunkten h₀, h₁, h₀', h₁' (Fig. 15) möglichst vollständig in Überdeckung mit den zugeordneten Schneidzähnen 5', 6', 7', 5, 6, 7 des anderen Schermessers 2', 2 liegen, wie dies auch in Fig. 15 dargestellt ist. Hierdurch wird eine Verletzung des Schnittgutes 27 durch freiliegende Scherschneiden 8 (Fig. 11) vermieden. Falls eine vollständige Überdeckung nicht erzielt werden kann, sollte die Überdeckung in den Umkehrpunkten h₀, h₁, h₀', h₁' (Fig. 15) aber doch mindestens so groß sein, dass das Schnittgut 27 für eine vollständige Durchtrennung in die Zwischenräume zwischen den Schneidzähnen 5, 6, 7 entsprechend der Darstellung nach Fig. 11 eingeführt werden kann.

Sofern nicht anders beschrieben, stimmen im Übrigen die Ausführungsbeispiele nach den Fig. 18 bis 23 in ihren übrigen Merkmalen und Bezugszeichen auch mit den voranstehend beschriebenen Ausführungsbeispielen überein.

## Patentansprüche

1. Messerbalken (1) einer motorisch angetriebenen Heckenschere, umfassend zwei Schermesser (2, 2'), wobei mindestens ein Schermesser (2, 2') um einen Hub (h, h') zwischen zwei Umkehrpunkten (h₀, h₁, h₀', h₁') gegenläufig zum anderen Schermesser (2', 2) oszillierend bewegbar ist, wobei beide Schermesser (2, 2') gegeneinander wirkende, in Abständen (a, b) zueinander angeordnete Schneidzähne (3, 4, 3', 4', 5, 6, 7, 5', 6', 7') aufweisen, wobei der Messerbalken (1) mindestens einen Trimmschnittbereich (9) aufweist, wobei im Trimmschnittbereich (9) zumindest ein Teil der Schneidzähne (5, 6, 7, 5', 6', 7') mit Scherschneiden (8) zum spanlosen, scherenden Durchtrennen von Schnittgut (27) versehen ist, wobei im Trimmschnittbereich (9) ein erster Schneidzahn (5, 5') des einen Schermessers (2, 2') in den beiden Umkehrpunkten (h₀, h₁, h₀', h₁') in Überdeckung mit einem ersten bzw. zweiten Schneidzahn (5', 6', 5, 6) des anderen Schermessers (2', 2) liegt, und wobei im Trimmschnittbereich (9) die Abstände (a) zwischen den Schneidzähnen (5, 6, 7, 5', 6', 7') und der Hub (h, h') derart aufeinander abgestimmt sind, dass der erste Schneidzahn (5, 5') des einen Schermessers (2, 2') zwischen seinen beiden Umkehrpunkten (h₀, h₁, h₀', h₁') einen zwischen dem ersten und dem zweiten Schneidzahn (5', 6', 5, 6) des anderen Schermessers (2', 2) liegenden dritten Schneidzahn (7', 7) des anderen Schermessers (2', 2) vollständig überstreicht,
**dadurch gekennzeichnet, dass** der Messerbalken (1) zwei sich gegenüberliegende Seiten (11, 12) aufweist, wobei der Trimmschnittbereich (9) auf der einen Seite (11) des Messerbalkens (1) angeordnet ist, wobei auf der gegenüberliegenden Seite (12) ein Grobschnittbereich (10) mit in regelmäßigen Abständen (b) zueinander angeordneten Schneidzähnen (3, 4, 3', 4') vorgesehen ist, wobei der Abstand (b) der Schneidzähne (3, 4, 3', 4') im Grobschnittbereich (10) größer ist als der Abstand (a) der Schneidzähne (5, 6, 7, 5', 6', 7') im Trimmschnittbereich (9), wobei im Grobschnittbereich (10) die Schneidzähne (3, 4, 3', 4') mit Scherschneiden (8) zum spanlosen, scherenden Durchtrennen von Schnittgut (27) versehen sind, und wobei im Grobschnittbereich (10) ein Schneidzahn (3, 4, 3', 4') des einen Schermessers (2, 2') in den beiden Umkehrpunkten (h₀, h₁, h₀', h₁') in Überdeckung mit einem Schneidzahn (3', 4', 3, 4) des anderen Schermessers (2', 2) liegt.

2. Messerbalken nach Anspruch 1,
**dadurch gekennzeichnet, dass** der dritte Schneidzahn (7, 7') des Trimmschnittbereiches (9) unmittelbar benachbart zwischen den ersten und zweiten Schneidzähnen (5, 6, 5', 6') des Trimmschnittbereiches (9) liegt.

3. Messerbalken nach Anspruch 1 oder 2,
**dadurch gekennzeichnet, dass** der Abstand (a) zwischen den Schneidzähnen (5, 6, 7, 5', 6', 7') des Trimmschnittbereiches (9) beider Schermesser (2, 2') im Verlauf des Trimmschnittbereiches (9) gleichmäßig ist.

4. Messerbalken nach Anspruch 3,
**dadurch gekennzeichnet, dass** der Abstand (a) zwischen den Schneidzähnen (5, 6, 7, 5', 6', 7') im Trimmschnittbereich (9) gleich der Hälfte der Summe des Hubes (h) des einen Schermessers (2) und des Hubes (h') des anderen Schermessers (2') ist.

5. Messerbalken nach einem der Ansprüche 1 bis 4, **dadurch gekennzeichnet, dass** der Messerbalken (1) eine für den Schnitt nutzbare Länge (1) aufweist, und dass sich der Trimmschnittbereich (9) auf einer Seite (11) des Messerbalkens (1) über die gesamte nutzbare Länge (1) erstreckt.

6. Messerbalken nach einem der Ansprüche 1 bis 5, **dadurch gekennzeichnet, dass** der Abstand (b) der Schneidzähne (3, 4, 3', 4') im Grobschnittbereich (10) das Doppelte vom Abstand (a) der Schneidzähne (5, 6, 7, 5', 6', 7') im Trimmschnittbereich (9) beträgt.

7. Messerbalken nach einem der Ansprüche 1 bis 6, **dadurch gekennzeichnet, dass** beide Schermesser (2, 2') jeweils um einen Hub (h, h') zwischen zwei Umkehrpunkten (h₀, h₁, h₀', h₁') gegenläufig oszillierend bewegbar sind.

8. Messerbalken nach Anspruch 7, **dadurch gekennzeichnet, dass** der Hub (h) des einen Schermessers (2) und der Hub (h') des anderen Schermessers (2') jeweils den gleichen Betrag aufweisen.

9. Messerbalken nach einem der Ansprüche 1 bis 8, **dadurch gekennzeichnet, dass** sämtliche Schneidzähne (3, 4, 3', 4', 5, 6, 7, 5', 6', 7') des Trimmschnittbereichs (9) und des Grobschnittbereichs (10) mit Scherschneiden (8) zum spanlosen, scherenden Durchtrennen von Schnittgut (27) versehen sind.

10. Messerbalken nach einem der Ansprüche 1 bis 9, **dadurch gekennzeichnet, dass** die Schermesser (2, 2') auswechselbar sind.

11. Heckenschere mit einem mindestens einen Trimmschnittbereich (9) aufweisenden Messerbalken (1) nach einem der Ansprüche 1 bis 10, **dadurch gekennzeichnet, dass** ein weiterer Messerbalken mit mindestens einem Grobschnittbereich (10) und ohne Trimmschnittbereich (9) vorgesehen ist, und dass der Messerbalken (1) mit dem mindestens einen Trimmschnittbereich (9) gegen den weiteren Messerbalken ohne Trimmschnittbereich (9) auswechselbar ist.

## Claims

1. Cutter bar (1) of a motor-driven hedge shear, comprising two cutting blades (2, 2'), wherein at least one cutting blade (2, 2') is capable of oscillating movement between two reversal points (h₀, h₁, h₀', h₁') by a stroke (h, h') in the opposite direction in respect to the other cutting blade (2', 2), wherein both cutting blades (2, 2') have cutting teeth (3, 4, 3', 4', 5, 6, 7, 5', 6', 7') acting against one another and arranged at distances (a, b) from one another, wherein the cutter bar (1) has at least one trim cut region (9), wherein in the trim cut region (9) at least a part of the cutting teeth (5, 6, 7, 5', 6', 7') is provided with shearing blades (8) for the chipless shearing severing of clippings (27), wherein in the trim cut region (9) a first cutting tooth (5, 5') of the one cutting blade (2, 2') overlaps a first or second cutting tooth (5', 6', 5, 6) of the other cutting blade (2', 2) at the two reversal points (h₀, h₁, h₀', h₁'), and wherein in the trim cut region (9) the distances (a) between the cutting teeth (5, 6, 7, 5', 6', 7') and the stroke (h, h') are matched in such a way that the first cutting tooth (5, 5') of the one cutting blade (2, 2') completely sweeps between its two reversal points (h₀, h₁, h₀', h₁') over a third cutting tooth (7', 7) of the other cutting blade (2', 2), which lies between the first and the second cutting tooth (5', 6', 5, 6) of the other cutting blade (2', 2),
**characterised in that** the cutter bar (1) has two opposite sides (11, 12),wherein the trim cut region (9) is located on the one side (11) of the cutter bar (1), wherein a rough cut region (10) with cutting teeth (3, 4, 3', 4') arranged at regular distances (b) from one another is provided on the opposite side (12), wherein the distance (b) between the cutting teeth (3, 4, 3', 4') in the rough cut region (10) is greater than the distance (a) between the cutting teeth (5, 6, 7, 5', 6', 7') in the trim cut region (9), wherein in the rough cut region (10) the cutting teeth (3, 4, 3', 4') are provided with shearing blades (8) for the chipless shearing severing of clippings (27), and wherein in the rough cut region (10) a cutting tooth (3, 4, 3', 4') of the one cutting blade (2, 2') overlaps a cutting tooth (3', 4', 3, 4) of the other cutting blade (2', 2) at the two reversal points (h₀, h₁, h₀', h₁').

2. Cutter bar according to claim 1,
**characterised in that** the first cutting tooth (7, 7') of the trim cut region (9) lies immediately adjacent between the first and second cutting teeth (5, 6, 5', 6') of the trim cut region (9).

3. Cutter bar according to claim 1 or 2,
**characterised in that** The distance (a) between the cutting teeth (5, 6, 7, 5', 6', 7') of the trim cut region (9) of both cutting blades (2, 2') is uniform along the trim cut region (9).

4. Cutter bar according to claim 3,
**characterised in that** the distance (a) between the cutting teeth (5, 6, 7, 5', 6', 7') in the trim cut region (9) is equal to half the sum of the stroke (h) of the one cutting blade (2) and the stroke (h') of the other cutting blade (2').

5. Cutter bar according to any of claims 1 to 4,
**characterised in that** the cutter bar (1) has a length (1) which is usable for the cut, and **in that** the trim cut region (9) extends along the entire usable length (1) on one side (11) of the cutter bar (1).

6. Cutter bar according to any of claims 1 to 5,
**characterised in that** the distance (b) between the cutting teeth (3, 4, 3', 4') in the rough cut region (10) is twice the distance (a) between the cutting teeth (5, 6, 7, 5', 6', 7') in the trim cut region (9).

7. Cutter bar according to any of claims 1 to 6,
**characterised in that** both cutting blades (2, 2') are capable of oscillating movement between two reversal points (h₀, h₁, h₀', h₁') by a stroke (h, h') in opposite directions.

8. Cutter bar according to claim 7,
**characterised in that** the stroke (h) of the one cutting blade (2) and the stroke (h') of the other cutting blade (2') have the same magnitude.

9. Cutter bar according to any of claims 1 to 8,
**characterised in that** all cutting teeth (3, 4, 3', 4', 5, 6, 7, 5', 6', 7') of the trim cut region (9) and of the rough cut region (10) are provided with shearing blades (8) for the chipless shearing severing of clippings (27).

10. Cutter bar according to any of claims 1 to 9,
**characterised in that** the cutting blades (2, 2') are exchangeable.

11. Hedge shear with a cutter bar (1) according to any of claims 1 to 10 having at least one trim cut region (9),
**characterised in that** a further cutter bar with at least one rough cut region (10) and without a trim cut region (9) is provided, and **in that** the cutter bar (1) with the at least one trim cut region (9) can be exchanged against the further cutter bar without a trim cut region (9).

## Revendications

1. Barre de coupe (1) d'un taille-haie entraîné par moteur, comprenant deux lames de cisaillement (2, 2'), au moins une lame (2, 2') étant apte à décrire un mouvement alternatif en sens inverse par rapport à l'autre lame (2', 2) sur une course (h, h') entre deux points d'inversion (h₀, h₁, h₀', h₁'), les deux lames de cisaillement (2, 2') comportant des dents coupantes (3, 4, 3', 4', 5, 6, 7, 5', 6', 7') à action contraire et disposées avec des écartements (a, b), la barre de coupe (1) comportant au moins une zone de coupe fine (9), dans ladite zone de coupe fine (9) une partie au moins des dents coupantes (5, 6, 7, 5', 6', 7') étant pourvues de tranchants de cisaillement (8) pour sectionner par cisaillement et sans copeaux un produit à couper (27), dans la zone de coupe fine (9) une première dent coupante (5, 5') d'une lame de cisaillement (2, 2') recouvrant, dans les deux points d'inversion (h₀, h₁, h₀', h₁), une première ou une deuxième dent coupante (5', 6', 5, 6) de l'autre lame de cisaillement (2', 2), et dans la zone de coupe fine (9) les écartements (a) entre les dents coupantes (5, 6, 7, 5', 6', 7') et la course (h, h') étant adaptés mutuellement pour que la première dent coupante (5, 5') d'une lame de cisaillement (2, 2') balaye entièrement entre ses deux points d'inversion (h₀, h₁, h₀', h₁') une troisième dent coupante (7', 7) de l'autre lame de cisaillement (2', 2), située entre les première et deuxième dent (5', 6', 5, 6) de ladite autre lame de cisaillement (2', 2),
**caractérisée en ce que** la barre de coupe (1) présente deux côtés opposés (11, 12), la zone de coupe fine (9) étant disposée sur un côté (11) de la barre de coupe (1) tandis qu'il est prévu sur le côté opposé (12) une zone de coupe grossière (10) avec des dents coupantes (3, 4, 3', 4') disposées suivant des écartements (b) réguliers, l'écartement (b) des dents coupantes (3, 4, 3', 4') dans la zone de coupe grossière (10) étant plus grand que l'écartement (a) des dents coupantes (5, 6, 7, 5', 6', 7') dans la zone de coupe fine (9), dans la zone de coupe grossière (10) les dents coupantes (3, 4, 3', 4') étant pourvues de tranchants de cisaillement (8) pour sectionner par cisaillement et sans copeaux un produit à couper (27), et dans la zone de coupe grossière (10) une dent coupante (3, 4, 3', 4') d'une lame de cisaillement (2, 2') recouvrant, dans les deux points d'inversion (h₀, h₁, h₀', h₁'), une dent coupante (3', 4', 3, 4) de l'autre lame de cisaillement (2', 2).

2. Barre de coupe selon la revendication 1,
**caractérisée en ce que** la troisième dent coupante (7, 7') de la zone de coupe fine (9) est directement voisine des première et deuxième dents (5, 6, 5', 6') de ladite zone de coupe fine (9), entre celles-ci.

3. Barre de coupe selon la revendication 1 ou 2,
**caractérisée en ce que** l'écartement (a) entre les dents coupantes (5, 6, 7, 5', 6', 7') de la zone de coupe fine (9) des deux lames de cisaillement (2, 2') est régulier sur toute ladite zone de coupe fine (9).

4. Barre de coupe selon la revendication 3,
**caractérisée en ce que** l'écartement (a) entre les dents coupantes (5, 6, 7, 5', 6', 7') dans la zone de coupe fine (9) des deux lames de cisaillement (2, 2') est égal à la moitié de la somme de la course (h) d'une lame de cisaillement (2') et de la course (h') de l'autre lame de cisaillement (2').

5. Barre de coupe selon l'une des revendications 1 à 4,
**caractérisée en ce que** la barre de coupe (1) présente une longueur (1) utilisable pour la coupe, et **en ce que** la zone de coupe fine (9), sur un côté (11) de la barre de coupe (1), s'étend sur toute ladite longueur (1) utilizable.

6. Barre de coupe selon l'une des revendications 1 à 5,
**caractérisée en ce que** l'écartement (b) des dents coupantes (3, 4, 3', 4') dans la zone de coupe grossière (10) est égal au double de l'écartement (a) des dents coupantes (5, 6, 7, 5', 6', 7') dans la zone de coupe fine (9).

7. Barre de coupe selon l'une des revendications 1 à 6,
**caractérisée en ce que** les deux lames de cisaillement (2, 2') sont aptes à décrire un mouvement alternatif en sens inverse par rapport à l'autre lame (2', 2) sur une course (h, h') entre deux points d'inversion (h₀, h₁, h₀', h₁').

8. Barre de coupe selon la revendication 7,
**caractérisée en ce que** la course (h) d'une lame de cisaillement (2) et la course (h') de l'autre lame de cisaillement (2') ont la même valeur.

9. Barre de coupe selon l'une des revendications 1 à 8,
**caractérisée en ce que** toutes les dents coupantes (3, 4, 3', 4', 5, 6, 7, 5', 6', 7') de la zone de coupe fine (9) et de la zone de coupe grossière (10) ont pourvues de tranchants de cisaillement (8) pour sectionner par cisaillement et sans copeaux un produit à couper (27).

10. Barre de coupe selon l'une des revendications 1 à 9,
**caractérisée en ce que** les lames de cisaillement (2, 2') sont aptes à être changées.

11. Taille-haie avec une barre de coupe (1) selon l'une des revendications 1 à 10 pourvue d'au moins une zone de coupe fine (9),
**caractérisé en ce qu'**il est prévu une autre barre de coupe avec au moins une zone de coupe grossière (10) et sans zone de coupe fine (9), et **en ce que** la barre de coupe (1) pourvue de la ou des zones de coupe fine (9) est apte à être remplacée par l'autre barre de coupe sans zone de coupe fine (9).
